# EUROPEAN PATENT APPLICATION

(11) **EP 1 885 129 A2**
(43) Date of publication of application: **06.02.2008**
(21) Application number: 07014048.8
(22) Date of filing: 18.07.2007
(51) Int. Cl.: H04N 7/01

(54) **Interpolation frame generating method and interpolation frame forming apparatus**

(30) Priority: 31.07.2006 JP 2006208792
(71) Applicant: Kabushiki Kaisha Toshiba, Minato-ku, Tokyo 105-8001 (JP)
(72) Inventor: Sato, Ko c/o Intellectual Property Diversion, Tokyo 105-8001 (JP); Yamasaki, Masaya c/o Intellectual Property Division, Tokyo 105-8001 (JP); Hirayama, Keiko c/o Intellectual Property Division, Tokyo 105-8001 (JP); Yoshimura, Hiroshi c/o Intellectuall Property Division, Tokyo 105-8001 (JP); Hamakawa, Yohei c/o Intellectual Property Division, Tokyo 105-8001 (JP); Douniwa, Kenichi c/o Intellectual Property Division, Tokyo 105-8001 (JP); Ogawa, Yoshihiko c/o Intellectual Property Division, Tokyo 105-8001 (JP)
(74) Representative: HOFFMANN EITLE

(57) **Abstract**

An interpolation frame generating method performs motion detection processing using two blocks having different sizes, and adopts a motion vector detected by a smaller block under normal conditions (Block 104). When a plurality of reliable motion vector candidates are detected in vector detection using the smaller block (YES of Block 103), a vector detected by a larger block is referred to (Block 105), and a motion vector which is closest to the motion vector detected with the larger block among the motion vectors detected with the smaller block is adopted as a motion vector of the block to be used for generating an interpolation frame (Block 106).

## Description

This invention relates to a technique of generating and inserting an interpolation frame between frame images forming moving images, and displaying movement of an object as smooth and natural movement.

When moving images are displayed on a liquid crystal display (LCD), the LCD displays frame images (hereinafter simply referred to as "frames") at a rate of, for example, 60 frames/second. The frames are sequential scanning images obtained by processing interlace signals of 60 fields/second. Specifically, LCDs display one frame for 1/60 second.

When such images displayed on LCDs are viewed, an image of prior frame is left as persistence of vision for viewer's eyes. Therefore, there are cases where a moving object in the images appears blurred, or movement of the object appears unnatural. Such a phenomenon appears more conspicuously in larger screens.

To prevent such blurring of moving images, there is a known method of displaying moving images by inserting an interpolation frame between two sequential frames (refer to Jpn. Pat. Appln. KOKAI Pub. No. 2005-6275). In this method, matching of image blocks forming frames is performed between two input frames including a former frame and a latter frame or more input frames, and thereby a motion vector of each block (direction and distance of movement of the object) is detected. A new interpolation frame located between the input frames is generated by using the motion vector of each block. The interpolation frame is inserted between the two input frames, and thereby moving images are displayed with increased number of frames.

The above block matching is a method of detecting which image block in a latter frame an image block of a predetermined size in a frame matches. A difference between a pixel of one image block in the former frame and a corresponding pixel of any one image block in the latter frame is calculated, and an image block of the latter frame having minimum cumulative value of difference (SAD: Sum of Absolute Difference) is detected as an image block which is most similar to the image block of the former frame. A difference of position between the most similar blocks of the former frame and the latter frame is detected as a motion vector.

When movement of an object is estimated based on block matching using SAD, if a periodical pattern exists in input frames, an accurate motion vector cannot be estimated in image blocks in the periodical pattern. Jpn. Pat. Appln. KOKAI Pub. No. 2005-56410 discloses a technique of correcting a motion vector of an image block with motion vectors of surrounding image blocks, if an observed image is a periodical pattern.

As described above, the method of correcting motion vector of an image block in the periodical pattern with motion vectors of surrounding blocks cannot properly correct the motion vector of the image block, if the periodical pattern is much larger than the image block or the motion vectors of the surrounding blocks have low reliability. Therefore, there is a problem that a motion vector of high reliability cannot be obtained.

According to an embodiment of the present invention, in an interpolation frame generating method which detects a motion vector by block matching, motion vector detection processing is performed by using two blocks having different sizes, and a motion vector detected by using the smaller block is adopted under normal conditions. If a plurality of reliable motion vector candidates are detected in the vector detection using the smaller block, a vector detected by using the larger block is referred to, and a vector which is closest to the motion vector detected by the large block among the motion vectors detected by the small block is adopted as a motion vector for generating an interpolation frame.

According to the present invention, it is possible to improve accuracy of detection of a motion vector for images including a periodical pattern, in detection of a motion vector for generating an interpolation frame.

The invention can be more fully understood from the following detailed description when taken in conjunction with the accompanying drawings, in which:
FIG. 1 is a block diagram illustrating an embodiment of an interpolation frame generating apparatus according to the present invention.
FIG. 2 is a diagram for explaining an example of block matching processing.
FIG. 3A is a diagram illustrating a state where an object 30 in a former frame 20 is located in a position of a latter frame 22, moving by 10 pixels in the horizontal direction from the position thereof in the former frame 20.
FIG. 3B is a graph showing relationship between the shift amount of image block and SAD in block matching processing.
FIG. 4A is a diagram illustrating a state of block matching processing according to the present invention, which is performed in the case where input frames include a periodical pattern.
FIG. 4B is a graph illustrating relationship between a shift amount of image block and SAD in block matching processing of the input frames as illustrated in FIG. 4A.
FIG. 5 is a block diagram illustrating an example of configuration of a motion vector detecting section 12.
FIG. 6 is a diagram illustrating another block matching processing.
FIG. 7 is a diagram illustrating a specific example of a size and a search range of a small block.
FIG. 8 is a diagram illustrating a specific example of a size and a search range of a large block.
FIG. 9 is a graph illustrating relationship between a shift amount of an image block and SAD when the block matching processing of FIG. 6 is performed by using the small block of FIG. 7 and the large block of FIG. 8.
FIG. 10 is a flowchart illustrating operation of vector determination section 12c in the block matching processing.
FIG. 11 is a block diagram illustrating another example of configuration of the motion vector detecting section 12.

An embodiment of the present invention is described below with reference to drawings.

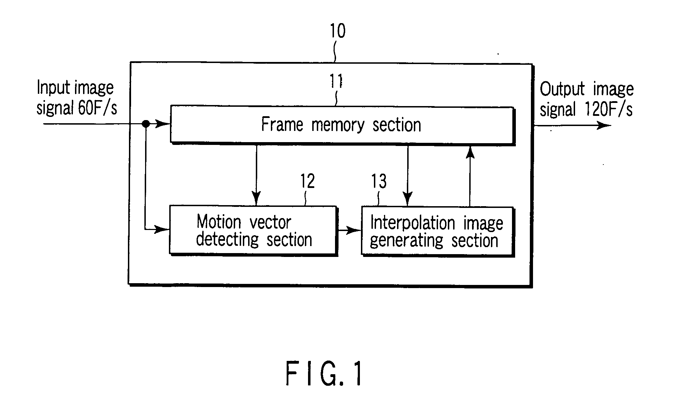

FIG. 1 is a block diagram illustrating an embodiment of an interpolation frame generating apparatus (frame number changing apparatus) according to the present invention.

An interpolation frame generating apparatus 10 includes a frame memory section 11, a motion vector detecting section 12, and an interpolation image generating section 13. The motion vector detecting section 12 detects a motion vector from, for example, sequential two frames in an input image signal by block matching processing. A frame rate of input image signals is, for example, 60 frames/second.

The interpolation image generating section 13 generates an interpolation frame on the basis of a detection result of the motion vector detecting section 12, and inserts the interpolation frame between the two frames. A frame rate of an output image signal, in which interpolation frames are inserted, is 120 frames/second, for example. The motion vector detecting section 12 and the interpolation image generating section 13 can be formed of hardware using individual electronic circuits, or software which is run by CPU (not shown).

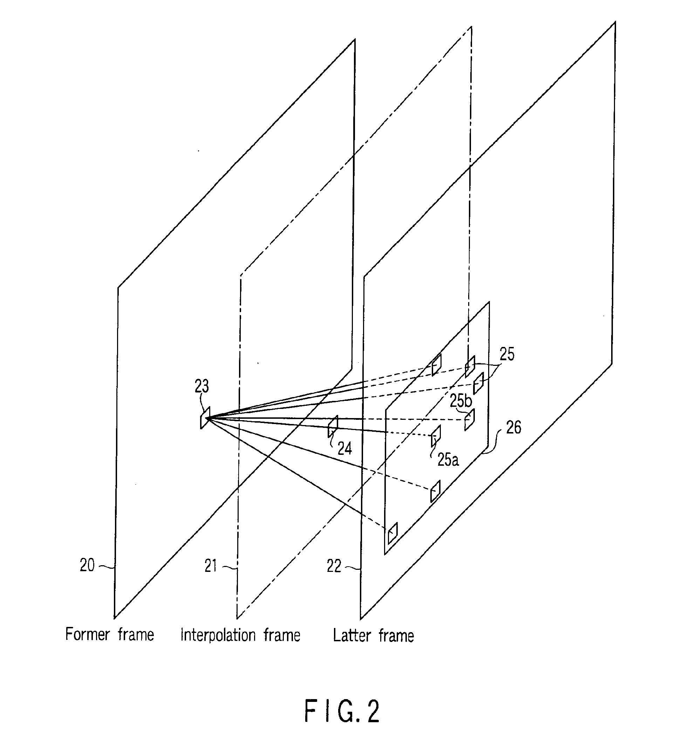

FIG. 2 is a diagram for explaining an example of block matching processing. A former frame 20 and a latter frame 22 are frames which are sequentially input.

An observed image block 23 in the former frame 20 is compared with each image block 25 in a search range 26 in the latter frame 22. The search range 26 is a region of a predetermined size. An image block 25a located in a position in the latter frame 22 corresponding to the position of the observed image block 23 in the former frame 20 serves as the center of the search range 26. A vector connecting the observed image block 23 with an image block (image block 25b in this example) having an image most similar to the image of the observed image block 23 in the search range 26 is determined as a motion vector of the observed image block 23. The motion vector 23 (including size and direction) is a vector indicated in two dimensions on a frame in actual processing, although it is shown in three-dimensional form in FIG. 2 for explanation's sake.

Similarity of image blocks are determined by obtaining an absolute difference value between pixel values of pixels which are located in the same position in the observed image block 23 and each image block 25 for each of pixels in the image block, and obtaining a sum of the absolute difference values (SAD). The image block 25b in which the SAD has a minimum value is determined as an image block most similar to the observed image block 23. A vector from the observed image block 23 to the image block 25b is determined as a motion vector of the observed image block 23. An interpolation image block 24 in an interpolation frame 21 is generated on the basis of the motion vector and image data of the observed image block 23 and the image block 23b.

Operation of block matching processing by the motion vector detecting section 12 is described in detail below.

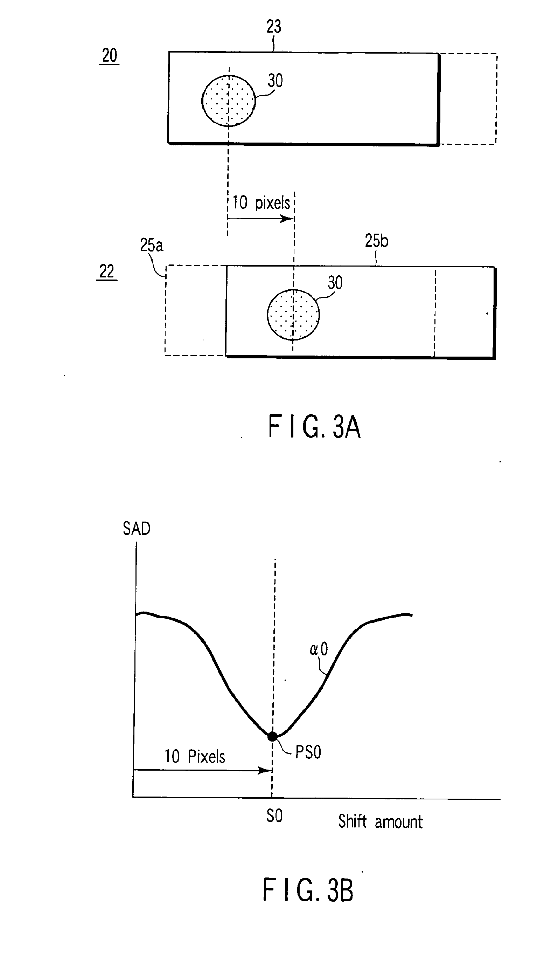

FIG. 3A illustrates a state where an object 30 in the former frame 20 moves by 10 pixels in the horizontal direction and is located in the latter frame 22. FIG. 3B is a graph illustrating relationship (SAD characteristic) between the shift amount of an image block and SAD in block matching processing. The block matching processing is performed by the motion vector detecting section 12. To simplify explanation, only horizontal block matching processing is explained.

In this case, when the observed image block 23 including the object 30 in the former frame 20 is shifted in increments of 1 pixel from the position of the center image block 25a in the search range of the latter frame 22, SAD has a minimum (smallest in this processing) value as illustrated in FIG. 3B in a position where the image block 23 is shifted by 10 pixels. A motion vector is detected based on the shift amount S0 of the minimum point PS0 and a direction thereof. Therefore, in this example, the motion vector of the observed image block 23 is detected as a vector of horizontal direction and 10 pixels. As a result, an image block obtained by shifting the observed image block 23 by 5 pixels in the horizontal direction from a corresponding position in the interpolation frame is generated as an image block in the interpolation frame. The shift amount S0 and the shift direction indicate a position of the image block 25b in the search range 26.

An optimum block size for accurate detection of a motion vector by block matching depends on resolution of input frames and movement of an object included in the frames. To perform block matching of a moving object, it is necessary to set the size of image blocks large enough to recognize the shape of the object (for example, an image block includes change in pixel value of horizontal pixels). However, setting the block size too large causes a problem of increasing the possibility that the block includes a plurality of moving objects. If a plurality of moving objects are included in one image block, it is difficult to specify a motion vector. Therefore, it is necessary to limit the block size to a certain size.

However, if the search range of the block includes a horizontal periodical pattern which is wider than the horizontal size of the block, it may be impossible to distinguish movement of the object from repetition of the periodical pattern and perform accurate movement detection.

The value of SAD has an only one minimum point (smallest point) in a vector (direction and shift amount) in a general natural image not including a periodical pattern, as illustrated in FIG. 3B. However, if a periodical pattern is included in the search range, there is the characteristic that the value of SAD has minimum points in a plurality of vectors in the search range.

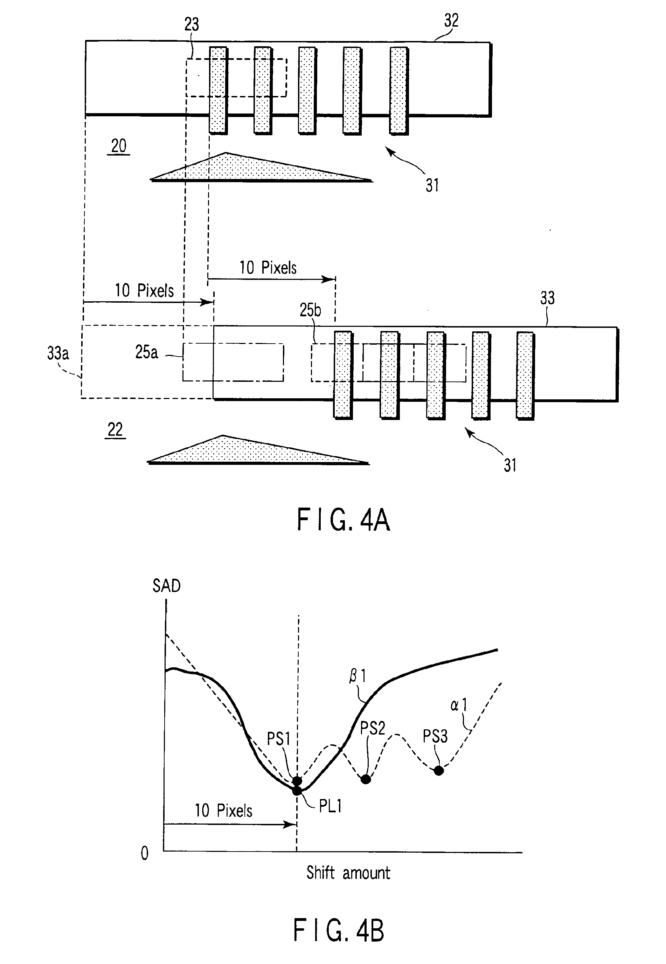

FIG. 4A is a diagram illustrating a state of block matching processing according to the present invention, which is performed in the case where input frames have a periodical pattern.

The upper diagram of FIG. 4A illustrates that a stripe-like periodical pattern 31 is displayed above a triangular pattern. The lower diagram of FIG. 4A illustrates that the periodical pattern 31 in the former frame 20 moves by 10 pixels in the right direction and displayed in the latter frame 22. FIG. 4B is a graph illustrating relationship between horizontal shift amount (suppose that vertical shift amount is 0) of image block and SAD in block matching processing of input frames as illustrated in FIG. 4A.

The motion vector detecting section 12 calculates SAD while shifting the image block 23 of the former frame in increments of 1 pixel in, for example, the right direction from the corresponding position (the position of the image block 25a: shift amount 0) on the latter frame. When the periodical pattern 31 exists as illustrated in FIG. 4A, a plurality of SAD minimum points PS1, PS2, and PS3 appear as in SAD characteristic α1 of FIG. 4B. If a periodical pattern is larger than a unit block size used in block matching as described above, a motion vector for the observed image block 23 cannot be specified.

Therefore, in the embodiment of the present invention, block matching processing is performed by using an image block 32 which includes the whole periodical pattern 31 in the horizontal or vertical direction, that is, which is larger than the observed image block 23.

As illustrated in FIG. 4A, the motion vector detecting section 12 calculates SAD while shifting the large block 32 in the former frame in increments of 1 pixel in, for example, the right direction from a corresponding position (the position of an image block 33a: shift amount 0) on the latter frame. The SAD characteristic in this case generally has a single minimum point PL1 as in SAD characteristic β1 of FIG. 4B.

A motion vector is determined based on a minimum point (PS1 in this example) of the small block 25b, which is closest to the minimum point PL1 of SAD detected by using the large block 32 (33). The number of the block sizes is not limited to two as in this embodiment, but three or more sizes may be used as described below. Using blocks of various sizes improves the accuracy of motion vector detection.

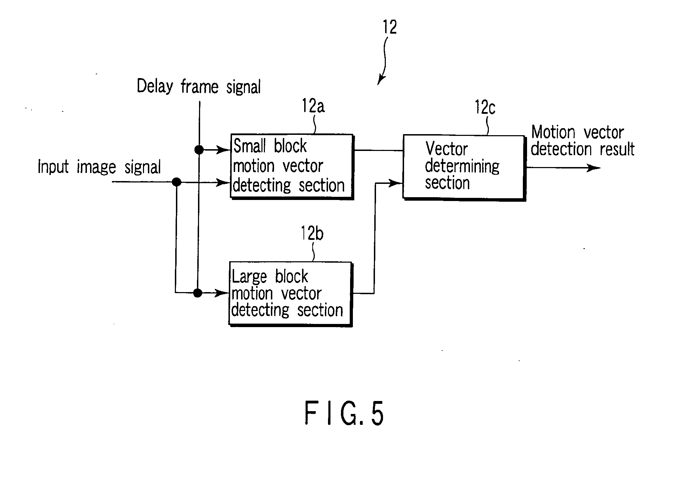

FIG. 5 is a block diagram illustrating an example of configuration of the motion vector detecting section 12.

The vector detecting section 12 includes a small block motion vector detecting section 12a, a large block motion vector detecting section 12b, and a vector determining section 12c. An input image signal and a delay frame signal from the frame memory 11 are input to each of the small block motion vector detecting section 12a and the large block motion vector detecting section 12b.

The small block motion vector detecting section 12a performs block matching processing using the above image block 23 as a small block, and thereby detects a motion vector, that is, a minimum point (horizontal shift amount and vertical shift amount). The large block motion vector detecting section 12b performs block matching processing as described above by using the large block 32, and thereby detects a motion vector.

Under normal conditions, the vector determining section 12c selects the motion vector detected by the small block detecting section 12a, and provides the motion vector to the interpolation image generating section 13. If a plurality of candidates of a reliable motion vector (whose SAD value of its minimum point is smaller than a predetermined value) are detected in motion vector detection using a small block, the vector determining section 12c refers to the motion vector detected by the large block motion vector detecting section 12b. The vector determining section 12c selects a vector which is closest to the motion vector (minimum point) detected by the large block motion vector detecting section 12b, from probable motion vectors (minimum points) detected by the small block motion vector detecting section 12a, and provides the selected motion vector to the interpolation image generating section 13.

As described above, this embodiment increases the accuracy of detection of the motion vector of images including a periodical pattern, without deteriorating the accuracy of detection of the motion vector of small objects included in frames.

Although motion vector detection using a small block is performed in parallel with motion vector detection using a large block in this embodiment, such motion vector detections may be performed in series. Specifically, the detection may be performed in the following sequence: motion vector detection is performed by using a small block; if a plurality of reliable motion vector candidates are detected, motion vector detection is performed by using a large block; and then an ultimate motion vector is determined among from the motion vector candidates. Performing such serial processing downsizes the circuit, and reduces power consumption.

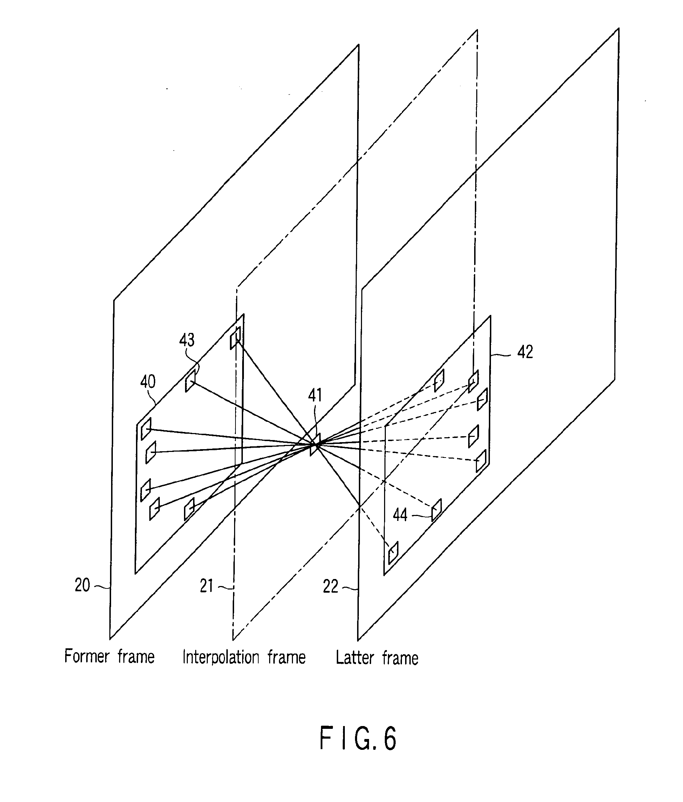

Next, another method of block matching processing is explained. FIG. 6 is a diagram illustrating another block matching processing.

In addition to the method of FIG. 2 in which SAD is determined by simply shifting an image block of a former frame in a latter frame, there is a method of detecting a motion vector using block matching, in which a motion vector is determined by performing block matching processing of image blocks which are symmetric about a point, as illustrated in FIG. 6.

Specifically, in the method of FIG. 6, SAD is calculated by comparing image blocks of the former frame 20 with image blocks of the latter frame 22 pixel by pixel, which are symmetrical with respect to a point where an interpolation image block 41 is inserted in the interpolation frame 21. A vector connecting image blocks which are most similar to each other (which have the smallest SAD) is determined as motion vector. This comparison is performed in a predetermined search range 40 in the former frame 20 and in a corresponding search range 42 in the latter frame 22.

If a pair of most similar image blocks is, for example, an image block 43 and an image block 44, a vector from the image block 43 to the image block 44 is determined as a motion vector of the interpolation image block 41. The interpolation image block 41 is generated in the interpolation frame 21, on the basis of the motion vector and image data of the most similar image blocks 43 and 44.

Next, the sizes and the motion vector search ranges of the image blocks are explained.

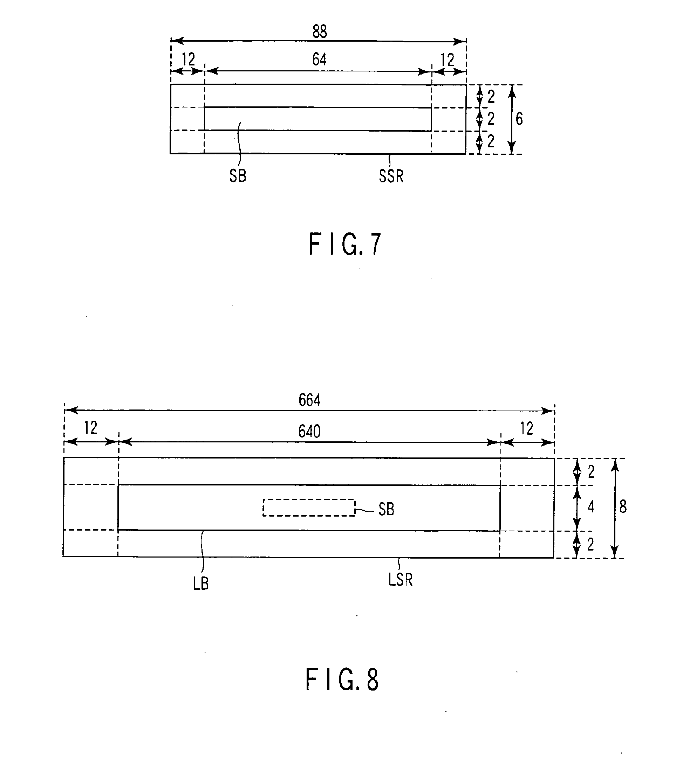

FIG. 7 illustrates a specific example of the size of a small block and the search range thereof, and FIG. 8 illustrates a specific example of the size of a large block and the search range thereof. These blocks and search ranges are applicable to the block matching processing of both of FIG. 2 and FIG. 6. An example of applying them to the block matching processing illustrated in FIG. 6 is explained in this embodiment. Further, to simplify the explanation, horizontal block matching processing is mainly described.

In FIG. 7, reference symbol SB denotes a small block, and SSR denotes a search range of the small block SB. The size of the small block SB is, for example, 64 pixels X 2 pixels. The small block SB is shifted on the former frame 20 by -12 to +12 pixels in the horizontal direction, and -2 to +2 pixels in the vertical direction. Simultaneously, the small block SB is shifted on the latter frame 22 by +12 to -12 pixels in the horizontal direction, and +2 to -2 pixels in the vertical direction.

Specifically, the interpolation image block 41 (a block of a size corresponding to that of the small block SB in this processing) inserted onto the interpolation frame 21 is used as the center of point symmetry. If the small block SB is shifted by, for example, +12 pixels on the former frame 20, the small block SB is shifted by -12 pixels on the latter frame 22. SAD is calculated by comparing pixel values of corresponding pixels between corresponding image blocks of the frames 20 and 22. Therefore, in block matching using the small block SB, both the search range SSR on the former frame 20 and the search range SSR on the latter frame 22 have the size of 88 pixels X 6 pixels.

As illustrated in FIG. 8, the size of a large block LB is, for example, 640 pixels X 4 pixels. The large block LB is shifted on the former frame 20 by -12 to +12 pixels in the horizontal direction, and -2 to +2 pixels in the vertical direction, in the same manner as the small block SB. Simultaneously, the large block LB is shifted on the latter frame 22 by +12 to -12 pixels in the horizontal direction, and +2 to -2 pixels in the vertical direction.

Specifically, the interpolation image block 41 (a block of a size corresponding to that of the large block LB in this processing) inserted onto the interpolation frame 21 is used as the center of point symmetry. If the large block LB is shifted by, for example, +12 pixels on the former frame 20, the large block LB is shifted by -12 pixels on the latter frame 22. SAD is calculated by comparing pixel values of corresponding pixels between corresponding image blocks of the frames 20 and 22. Therefore, in block matching using the large block LB, both a search range LSR on the former frame 20 and a search range LSR on the latter frame 22 have the size of 664 pixels X 8 pixels.

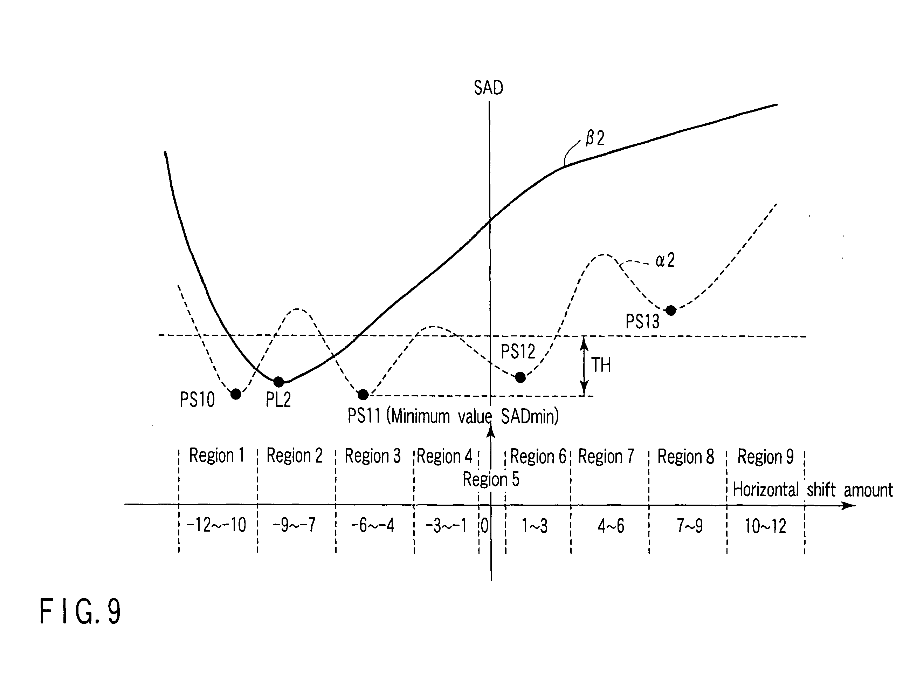

FIG. 9 is a graph illustrating relationship (SAD characteristic) between shift amount of image block and SAD when the block matching processing of FIG. 6 is performed by using the small block of FIG. 7 and the large block of FIG. 8.

In FIG. 9, the horizontal axis indicates a horizontal shift amount of image block, and the vertical axis indicates SAD. The shift amount of the horizontal axis indicates the image block shift amount on the former frame 20 or the latter frame 22.
Further, the shift amount of the horizontal axis is divided into 9 regions (Region 1 to Region 9), and Region 5 is a region having 0 shift amount. A curve α2 indicates a block matching processing result obtained by using the small block, and a curve β2 indicates a block matching processing result obtained by using the large block.

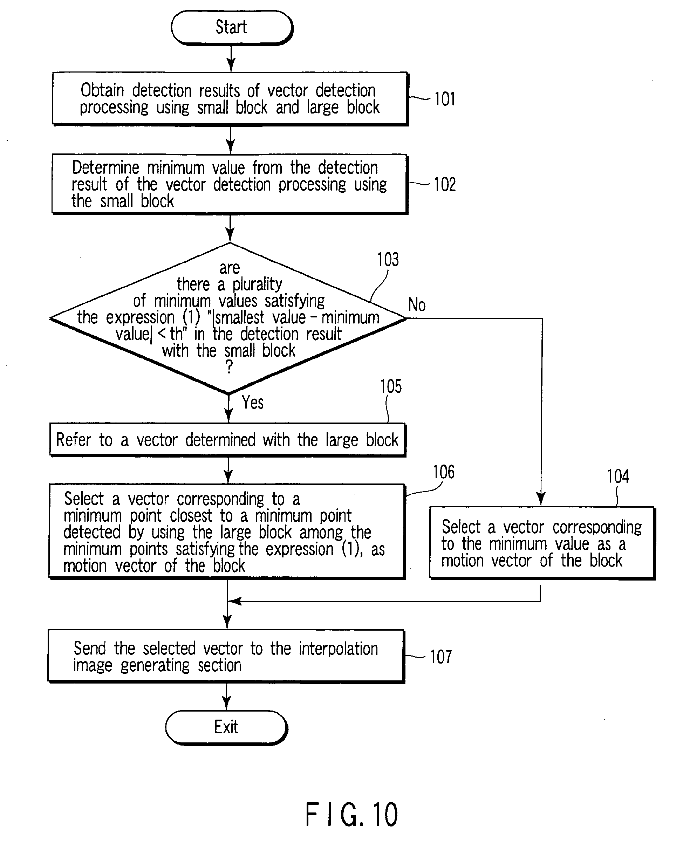

The block matching processing is explained in detail below. The motion vector detecting section 12 has the configuration illustrated in FIG. 5. To simplify explanation, only horizontal block matching processing is explained also in this example. FIG. 10 is a flowchart illustrating operation of the vector determining section 12c in the block matching processing. Operations of the small block motion vector detecting section 12a and the large block motion vector detecting section 12b are the same as the above, and explanation of detailed operations thereof is omitted.

The vector determining section 12c obtains respective detection processing results (information of minimum points) from the small block motion vector detecting section 12a and the large block motion vector detecting section 12b (step (Block) 101).

As indicated by the curve α2, when the small block SB is shifted from -12 pixels to +12 pixels, four minimum points PS10 to PS13 are generated in this example. The vector determining section 12c determines the smallest value SADmin in the whole search region from the minimum value group of the minimum points provided from the small block motion vector detecting section 12a (Block 102). Motion vectors indicated by SAD minimum values (PS10, PS11, and PS12) existing in a predetermined range TH from the minimum value SADmin, that is, minimums value which satisfy the expression "| smallest value - minimum valuel< TH" are selected as reliable motion vector candidates.

If there is only one reliable motion vector candidate (NO of Block 103), the vector determining section 12c supplies information of the SAD minimum point as a motion vector to the interpolation image generating section 13 (Block 104).

If there are a plurality of reliable motion vectors as illustrated in FIG. 9 (YES of Block 103), the vector determining section 12c determines that a periodical pattern exists in the search region, and refers to a motion vector detected by the large block motion vector detecting section 12b (Block 105). The vector determining section 12c adopts, as a motion vector used for generating the interpolation image block 41, a vector indicated by the minimum value PS10 which is closest to the minimum value PL2 detected by using the large block LB among the reliable motion vector candidates (Block 106).

In Step 106, if there are a plurality of minimum points detected by the large block, a minimum point having the smallest SAD among the minimum points is determined as a most reliable minimum point (motion vector). Therefore, the vector determining section 12c adopts, as the motion vector used for generating the interpolation image block 41, a minimum point which is closest to the most reliable minimum point detected by using the large block among the minimum points (motion vector candidates) detected by using the small block SB.

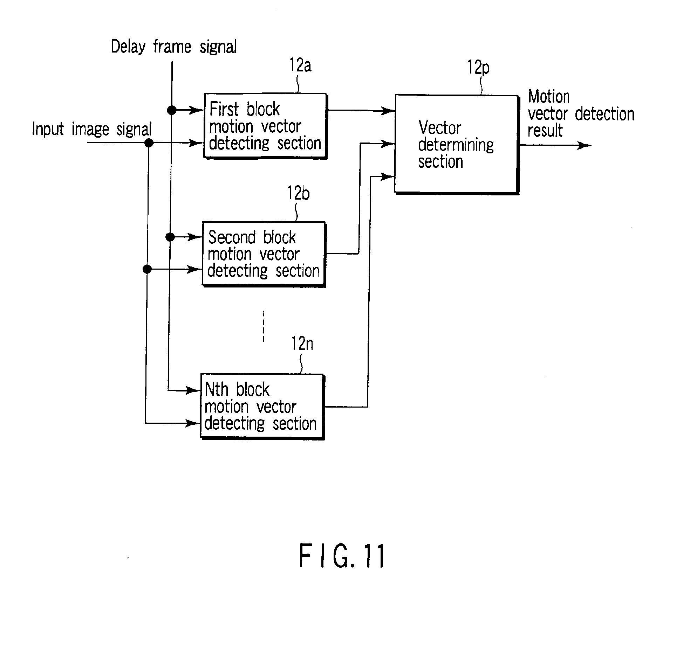

FIG. 11 is a block diagram illustrating another example of configuration of the motion vector detecting section 12.

This motion vector detecting section has first to Nth block motion vector detecting sections 12a to 12n. The first to Nth block motion vector detecting sections 12a to 12n perform block matching processing using respective blocks of N sizes (2<N) which are different from each other. The first block motion vector detecting section 12a performs block matching processing using the smallest block, and the Nth block motion vector detecting section 12a performs block matching processing using the largest block.

If the first block motion vector detecting section 12a detects a plurality of motion vector candidates, the vector determining section 12p adopts a motion vector, which is closest among the detected motion vector candidates to the most reliable motion vector of the motion vectors detected by using the second to Nth block motion vector detecting sections 12b to 12n, as a motion vector used for generating the interpolation block. Thereby, it is possible to achieve higher accuracy of detection in motion vector detection for frames having a periodical pattern.

As described above, according the embodiment of the present invention, it is possible to increase accuracy of detection of a motion vector for images including a periodical pattern.

The above explanation is an embodiment of the present invention, and does not limit the apparatus and method of the present invention. Various modifications can be easily carried out for the present invention.

## Claims

1. An interpolation frame generating method generating a new interpolation frame located between input frame images by using the input frame images, **characterized by** comprising:
detecting (12) a motion vector of an object in the frame images by block matching processing between the input frame images; and
generating (13) an interpolation frame by using the detected motion vector and inserting the interpolation frame between the input frame images;
wherein the block matching processing includes:
detecting (12a, 12b) motion vector candidates by using two blocks of different sizes with respect to an interpolation block in the interpolation frame;
adopting (104) a motion vector candidate detected by using a smaller block of the two blocks as the motion vector used for generating the interpolation block, when only one motion vector candidate is detected by using the smaller block; and
adopting (106), as the motion vector used for generating the interpolation block, a motion vector which is closest to a most reliable motion vector detected by using a larger block of the two blocks, among a plurality of motion vector candidates detected by block matching processing using the smaller block, when a plurality of motion vector candidates are detected by the block matching processing using the smaller block.

2. An interpolation frame generating method according to claim 1, **characterized in that**
the block matching processing (12a) using the smaller block includes calculating absolute difference values between corresponding pixel values of image blocks in respective search ranges on a former frame image and a latter frame image of the input frame images, and selecting a motion vector based on a position in the search ranges of a pair of blocks whose SAD indicating an cumulative sum value of the absolute difference values has a minimum value is selected as the motion vector candidate.

3. An interpolation frame generating method according to claim 2, **characterized by** further comprising:
obtaining, when a plurality of SAD minimum values are detected in the block matching processing using the smaller block, a SAD smallest value (SADmin) in the whole search region from a group of the minimum values, and selecting motion vectors indicated by SAD minimum values existing in a predetermined range (TH) from the SAD smallest value as reliable motion vector candidates; and
adopting, as the motion vector used for generating the interpolation block, a vector indicated by a SAD minimum value PS10, which is closest to a position of a SAD minimum value PL2 detected by using the larger block, among SAD minimum values of the reliable motion vector candidates.

4. An interpolation frame generating method according to claim 1, **characterized in that**
the block matching processing includes detecting motion vector candidates for the interpolation block of the interpolation frame by using three or more blocks having different sizes, and
when a plurality of vector candidates are detected in block matching processing using a smallest block, a motion vector candidate, which is closest to a most reliable motion vector of motion vectors detected by using blocks other than the smallest block, among the detected motion vector candidates, is adopted as the motion vector used for generating the interpolation block.

5. An interpolation frame generating apparatus which generates a new interpolation frame located between input frame images by using the input frame images, **characterized by** comprising:
a motion vector detecting unit which detects a motion vector of an object in the frame images by block matching processing between the input frame images; and
an inserting unit which generates an interpolation frame by using the detected motion vector and inserts the interpolation frame between the input frame images,
the motion vector detecting unit including:
a unit which detects motion vector candidates by using two blocks of different sizes with respect to an interpolation block in the interpolation frame;
a first adopting section which adopts a motion vector candidate detected by using a smaller block of the two blocks as the motion vector used for generating the interpolation block, when only one motion vector candidate is detected by using the smaller block; and
a second adopting section which adopts, as the motion vector used for generating the interpolation block, a motion vector which is closest to a most reliable motion vector detected by using a larger block of the two blocks, among a plurality of motion vector candidates detected by block matching processing using the smaller block, when a plurality of motion vector candidates are detected by the block matching processing using the smaller block.
